(19) Europäisches Patentamt / European Patent Office / Office européen des brevets

(11) **EP 2 992 067 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **14724636.7**

(22) Anmeldetag: **02.05.2014**

(51) Internationale Patentklassifikation (IPC):
**C09K 8/584** (2006.01) **C09K 8/588** (2006.01)
**C08F 2/32** (2006.01)

(52) Gemeinsame Patentklassifikation (CPC):
(C-Sets verfügbar)
**C09K 8/588; C08F 220/52; C08L 33/26;**
**C09K 8/584** (Forts.)

(86) Internationale Anmeldenummer:
**PCT/EP2014/001171**

(87) Internationale Veröffentlichungsnummer:
**WO 2014/177282 (06.11.2014 Gazette 2014/45)**

(54) **ELEKTROLYTHALTIGE WÄSSRIGE POLYMERLÖSUNG UND VERFAHREN ZUR TERTIÄRFÖRDERUNG VON ERDÖL**

ELECTROLYTE-CONTAINING AQUEOUS POLYMER SOLUTION AND METHOD FOR TERTIARY RECOVERY OF PETROLEUM

SOLUTION AQUEUSE DE POLYMÈRE QUI CONTIENT DES ÉLECTROLYTES ET PROCÉDÉ D'EXPLOITATION TERTIAIRE DE PÉTROLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2013 DE 102013007680**

(43) Veröffentlichungstag der Anmeldung:
**09.03.2016 Patentblatt 2016/10**

(73) Patentinhaber: **TouGas Oilfield Solutions GmbH 60314 Frankfurt am Main (DE)**

(72) Erfinder:
• **USENER, Carolin**
**48249 Dülmen (DE)**
• **KRATTENMACHER, Manfred**
**61184 Karben (DE)**
• **DUGONJIC-BILIC, Fatima**
**63075 Offenbach (DE)**
• **NEUBER, Marita**
**63303 Dreieich (DE)**

(74) Vertreter: **Dörr, Klaus**
**Dörr IP**
**Nordring 29**
**65719 Hofheim (DE)**

(56) Entgegenhaltungen:
EP-A1- 2 457 973   GB-A- 2 146 260
US-A- 3 624 019   US-A- 3 734 873
US-A- 5 110 853   US-A1- 2003 204 014
US-A1- 2004 260 017   US-A1- 2012 132 420
US-B1- 6 414 080

Bemerkungen:
Die Akte enthält technische Angaben, die nach dem Eingang der Anmeldung eingereicht wurden und die nicht in dieser Patentschrift enthalten sind.

EP 2 992 067 B1

(52) Gemeinsame Patentklassifikation (CPC): (Forts.)

C-Sets
C08F 220/585

**Beschreibung**

Die vorliegende Erfindung betrifft eine elektrolythaltige wässrige Polymerlösung und deren Einsatz bei der Tertiärförderung von Erdöl.

Es ist seit vielen Jahren bekannt, dass mit primären Fördermethoden aus Erdöllager-stätten nur ein geringer Teil des Erdöls gewonnen werden kann. Tertiäre Förder-maßnahmen, wie z.B. Wasserfluten, liefern weitere Mengen an Rohöl. Es bleibt jedoch immer noch ein großer Teil des vorhandenen Öls in der Lagerstätte zurück. Tertiäre Förder-maßnahmen (enhanced oil recovery (EOR)) sind bekannt dafür, dass die Ausbeutungsrate der Lagerstätten signifikant erhöht werden kann. Eine dieser EOR-Methoden beinhaltet das so genannte Polymerfluten. Bei dieser Methode ver-wendet man wässrige Polymerlösungen, manchmal in Kombination mit einem Tensid, um die Entölung der Lagerstätte positiv zu beeinflussen.

Durch die Viskositätserhöhung des Wassers mittels zugesetzter Polymere wird das Mobilitätsverhältnis von Wasser zu Rohöl derart verändert, dass mehr Öl mobilisiert werden kann. Gebräuchliche Polymere hierfür sind hochmolekulare teilhydrolysierte Polyacrylamide. Allerdings kann die Mobilität und der Durchlaufwirkungsgrad ("sweep efficiency") nur dann erfolgreich kontrolliert werden, wenn die Viskosität der Polymerlösung während der gesamten Ausbreitung im Reservoir beibehalten werden kann.

Die Verwendung von Tensiden für EOR-Methoden ist bereits häufig beschrieben worden (vergl. z.B. Surfactants: Fundamentals and Application in the Petroleum Industry, L. L. Schramm, Cambridge Universtity Press, 2000, 203-250. Das Ziel hierbei ist es, die Grenzflächenspannung zwischen Wasser und Öl (Rohöl) zu senken, um so eine Emulsifikation des Öls in der wässrigen Phase zu erreichen. Typischerweise werden hierzu Tenside des Sulphonat-, Sulfat- oder Carboxylat-Typs verwendet. Ein Nachteil dieser Technik ist jedoch, dass die Menge an Tensid, die für eine effiziente Emulsifikation des Rohöls nötig ist, sehr hoch ist (1 bis 5 % des Rohöls in der Lagerstätte), was diese Methode unwirtschaftlich macht. Beispiele für das Tensidfluten aus der Patentliteratur findet man beispielsweise in den DE-AS 1 082 208, DE 34 22 613 A1, DE-AS 26 46 507 und DE-AS 1 234 646.

Um den Nachteil beim Tensidfluten zu überwinden wurde das sogenannte Alkali-Surfactant-Polymerfluten (ASP) entwickelt. Dabei werden Alkalihydroxide oder -carbonate in Kombination mit Polyacrylamiden zugesetzt. Die Tensidkonzentration kann dann im Vergleich zu reinem Tensidfluten reduziert werden. Ein Nachteil dieses Verfahrens ist jedoch, dass das Injektionswasser aufgereinigt werden muss, da zweiwertige Ionen mit den Alkali-Komponenten zu Ausfällungen führen würden. Das Injektionswasser muss daher vor ASP-Maßnahmen von diesen zweiwertigen Ionen befreit werden um eine Verstopfung des Reservoirs zu vermeiden. Das bedeutet, dass diese Methode sowohl technische als auch ökonomische Grenzen aufweist.

Viele Tenside zeigen beim Einbringen in heiße salzhaltige wässrige Lösungen eine Eintrübung ("Trübungspunkt"). Das bedeutet, dass diese Tenside in heißen salinen Wässern agglomerieren. Solche Tenside sind für das Tensidfluten nicht geeignet.

Teilweise werden auch nur Polymerlösungen oder Kombinationen von Tensid und Polymer eingesetzt, um die Ausbeutung von Erdöllagerstätten zu erhöhen. Dafür finden sich zahlreiche Beispiele in der Patentliteratur, wie DE-AS 1 116 171, DE-AS 1 033 155, DE-AS 1 097 931, DE-AS 1 097 385, DE-AS 1 017 560, DE-AS 1 014 943, DE 25 57 324 A1, DE 25 54 082 A1, DE 14 138 A1, DE-AS 24 32 699, WO 2011/092221 A1, WO 2011/113470 A1 und WO 2010/133258 A1. In vielen dieser Dokumente wird der Einsatz von Celluloseetherderivaten als Polymer vorgeschlagen. Diese Polymeren haben sich als nicht besonders temperaturstabil erwiesen. Auch ist deren Beständigkeit gegenüber Abbau durch Mikroorganismen nur begrenzt, so dass diese im Allgemeinen in Kombination mit Bioziden eingesetzt werden müssen.

Insbesondere aus DE-AS 24 32 699 ist ein Verfahren zur Herstellung von sedimentionsstabilen Wasser-in-Öl-Dispersionen von Acrylamid-Polymerisaten offenbart, bei denen die Wasser-in-Öl-Dispersion noch zusätzlich zu einem hydrophoben organischen Dispersionsmedium ein Netzmittel enthält, dessen HLB-Wert mehr als 10 beträgt. Bespielhaft genannt werden nichtionische und anionische Netzmittel, wie ethoxylierte Alkylphenole, Dialkylester von Natriumsulfosuccinaten, Seifen von Fettsäuren mit 10-22 C-Atomen, sowie Alkalisalze von Alkyl- oder Alkenylsulfaten mit 10-26 C-Atomen. Diese Emulgatoren werden bei der inversen Emulsionspolymerisation als Stabilisatoren eingesetzt.

US 2010/0197529 A1 beschreibt die Verwendung von Tensiden gemeinsam mit einem Polymer, welches mindestens ein hydrophobes kationisches Monomer aufweist, um das Öl in der Lagestätte zu emulsifizieren und somit die Förderrate zu erhöhen. Die Kombination aus Polymer und Tensid wird jedoch ausschließlich in Natriumchlorid-Lösungen untersucht. Eine Kompatibilität mit zweiwertigen Kationen geht hieraus nicht hervor.

WO 00/73623 A1 beschreibt die Viskosifizierung von Salzlösungen mittels hydrophob assoziierter Polymere in Kombination mit mindestens einem Tensid mit einer Temperaturstabilität der aufgebauten Viskosität im Bereich von 20°C bis 60°C. Der Salzgehalt der Lösung beträgt dabei 0,5 bis 10 Gew.% bezogen auf Wasser. EP2457973 offenbart die Verwendung eines hydrophob assoziierenden Polymers bei der Erdölförderung durch Polymerfluten. US6414080 offenbart eine inverse Polymeremulsionszusammensetzung, die ein Copolymer aus Dimethylacrylamid und Acrylamidomethylpropansulfonsäure (AMPS) sowie deren Salzen enthält. Das Polymer wird unter anderem zur Kontrolle des Flüssigkeitsverlustes in Ölfeldanwendungen genutzt.

Es ist bekannt, dass bei teilhydrolysierten Polyacrylamiden in Gegenwart von zweiwertigen Ionen, wie z. B. Calcium und Magnesium, die Viskosität der Polymerlösung auf Grund von Brückenbildungen zwischen den anionischen Ladungen und den Ca- oder Mg-Ionen sinkt (D. B. Levitt, G. A. Pope, SPE 113845, 2008). Letztlich führt diese Wechselwirkung zur Ausfällung des Polymers und zum vollständigen Verlust der ursprünglichen Viskosität. Mit zunehmender Temperatur nimmt die Hydrolyse der Acrylamideinheiten zu, was dann zu entsprechend schnellerer Ausfällung der Polymere in Gegenwart von Salz führt. Je höher der Salzgehalt der Injektionslösungen, desto schneller findet somit der Viskositätsverlust statt.

Polyacrylamide können mit funktionalen Monomeren wie z.B. N-Vinylpyrrolidon, N,N-Dimethylacrylamid oder 2-Acrylamido-2-methylpropansulfonsäure (AMPS) modifiziert werden. Dadurch kann eine erhöhte Toleranz gegenüber zweiwertigen Kationen und Schutz gegen Hydrolyse durch einen stabilisierenden Nachbargruppeneffekt erreicht werden.

In der DE 10 2004 035 515 A1 werden thermostabile, wasserlösliche, bei hohen Temperaturen vernetzbare Polymere beschrieben. Diese leiten sich von unterschiedlichen Monomeren ab, von denen einige mit mehrwertigen Metallionen vernetzbare Gruppen tragen. Diese Copolymeren bilden in Gegenwart solcher Metallionen daher dreidimensionale Netzwerke aus und eigenen sich daher nicht für das Tensidfluten, bei dem nicht vernetzende Copolymere eingesetzt werden.

EP 0 233 533 A2 beschreibt ein Homopolymer aus AMPS und ein Copolymer aus AMPS und N, N-Dimethylacrylamid. Diese Polymere werden als thermisch stabil auch bei Temperaturen oberhalb von 90 °C beschrieben. Der Gehalt an zweiwertigen Ionen in den Testlösungen liegt jedoch nur bei maximal 1%.

Die Handhabung und Injektion solcher Lösungen stellt den Anwender teilweise vor enorme technische Schwierigkeiten auf Grund von Inkompatibilität bestimmter Zusätze, vor allem in hochsalinen Lagerstätten.

Es besteht daher der Bedarf an Kombinationen aus Polymer und Tensid, die auch in hochsalinen Lagerstätten in der Lage sind eine ausreichende Viskosität aufzubauen und gleichzeitig ein geeignetes Injektionsverhalten aufweisen.

Überraschenderweise wurde gefunden, dass auch in hochsalinen Lagerstätten mittels einer Kombination aus bestimmten wasserlöslichen Polymeren mit bestimmten Tensiden eine ausreichende Viskosität für das Polymerfluten in Erdöllagerstätten aufgebaut werden kann und dass durch den Zusatz der Tenside die Injizierbarkeit der Lösung in die Lagerstätte verbessert wird.

Die vorliegende Erfindung betrifft eine elektrolythaltige wässrige Polymerlösung gemäß Anspruch 1.

Nachfolgend werden unter Elektrolyten organische und anorganische, im festen Zustand kristalline Verbindungen verstanden, die sich unter Dissoziation in Kationen und Anionen in Wasser lösen, wobei die wasserlöslichen Polymere von dieser Definition ausgenommen sind.

Die Elektrolyte in der erfindungsgemäßen wässrigen Polymerlösung liegen in der Regel als Alkalimetall - und/oder Erdalkalimetallsalze vor. Dabei kann es sich um Hydroxide, Sulfide, Sulfite, Sulfate, Nitrate, Phosphate und vorzugsweise um Halogenide, insbesondere Chloride, handeln. Der Salzgehalt der erfindungsgemäßen Polymerlösung beträgt zwischen >10 Gew.-% und 35 Gew.-%, bevorzugt zwischen 10,5 Gew.-% und 35 Gew.-%, besonders bevorzugt zwischen 11 Gew.-% und 35 Gew.-%, besonders bevorzugt zwischen 12 Gew.-% und 35 Gew.-%, besonders bevorzugt zwischen 13 Gew.-% und 35 Gew.-%, insbesondere zwischen 15 Gew.-% und 25 Gew.-%, bezogen auf die Gesamtmenge der Polymerlösung. Besonders bevorzugt liegen Alkalimetallsalze und/oder Erdalkalimetallsalze als Elektrolyte vor, insbesondere Alkalimetallhalogenide und/oder Erdalkalimetallhalogenide. Innerhalb des vorstehend genannten Salzgehaltes beträgt der Gehalt an Salzen mit mehrwertigen Metallionen, insbesondere aus der Gruppe der Erdalkalimetall-Ionen mindestens 0,01 Gew.-%, vorzugsweise mindestens 1 Gew.-%. Ganz besonders bevorzugt liegen Natriumchlorid, Kaliumchlorid, Magnesiumchlorid und/oder Calciumchlorid. als Elektrolyte vor.

Bei dem erfindungsgemäß eingesetzten Copolymer handelt es sich um ein Copolymer gemäß Anspruch 1. Besonders bevorzugt ist das erfindungsgemäß eingesetzte Copolymer ein Copolymer, das ausschließlich von Carbonsäureamid(en) und von ethylenisch ungesättigten Sulfonsäure(n) abgeleitete Struktureinheiten aufweist.

Bevorzugt eingesetzt werden Copolymere, die Struktureinheiten aufweisen, welche sich von Acrylamid und/oder Methacrylamid, ableiten.

Ebenfalls bevorzugt eingesetzt werden Copolymere, die Struktureinheiten aufweisen, welche sich von Vinylsulfonsäure, 2-Acrylamido-2-methylpropansulfonsäure, 2-Methacrylamido-2-methylpropansulfonsäure, Styrolsulfonsäure, deren Alkalimetallsalzen und/oder Ammoniumsalzen, vorzugsweise von 2-Acrylamido-2-methylpropansulfonsäure und/oder 2-Methacrylamido-2-methylpropansulfonsäure, ableiten

Bei den weiteren mit Carbonsäureamiden und mit ethylenisch ungesättigten Sulfonsäuren copolymerisierbaren Monomeren handelt es sich um ethylenisch ungesättigte Carbonsäuren und/oder um zusätzliche damit copolymerisierbare Monomere. Letztere werden insbesondere ausgewählt aus der Gruppe der Alkylester von ethylenisch ungesättigten Carbonsäuren, der Oxyalkylester von ethylenisch ungesättigten Carbonsäuren, der Ester von ethylenisch ungesättigten Carbonsäuren mit N-Dialkylalkanolaminen und/oder der N-Vinylamide.

Bei den ethylenisch ungesättigten Carbonsäuren handelt es sich vorzugsweise um Acrylsäure, Methacrylsäure, Fumarsäure, Maleinsäure, Itaconsäure und/oder Crotonsäure.

Bei dem Alkylester von ethylenisch ungesättigten Carbonsäuren handelt es sich vorzugsweise um einen Alkylester der Acrylsäure, der Methacrylsäure, der Fumarsäure, der Maleinsäure, der Itaconsäure oder der Crotonsäure ist, ganz besonders bevorzugt um einen Alkylester mit 1-8 C-Atomen.

Bei dem Oxyalkylester von ethylenisch ungesättigten Carbonsäuren handelt es sich vorzugsweise um einen 2-Hydroxyethylester der Acrylsäure, der Methacrylsäure, der Fumarsäure, der Maleinsäure, der Itaconsäure oder der Crotonsäure.

Bei dem Ester von ethylenisch ungesättigten Carbonsäuren mit N-Dialkylalkanolaminen handelt es sich vorzugsweise um N,N-Dimethylethanolaminmethacrylat, dessen Salze oder quaternären Produkte.

Bei dem N-Vinylamid handelt es sich vorzugsweise um N-Vinylformamid, N-Vinylacetamid, N-Vinyl-N-methylacetamid oder um cyclische N-Vinylamid-Verbindungen, bevorzugt um N-Vinylpyrrolidon, N-Vinylcaprolactam oder N-Vinylpyridin.

Erfindungsgemäß werden synthetische wasserlösliche Copolymere eingesetzt, die aus Struktureinheiten bestehen, die abgeleitet sind von

i) Amid einer ethylenisch ungesättigten Carbonsäure und ethylenisch ungesättigten Sulfonsäure sowie deren Alkalimetallsalze und/oder Ammoniumsalze;
ii) Amid einer ethylenisch ungesättigten Carbonsäure, ethylenisch ungesättigten Sulfonsäure sowie deren Alkalimetallsalze und/oder Ammoniumsalze und N-Vinylamid,
iii) Amid einer ethylenisch ungesättigten Carbonsäure, ethylenisch ungesättigten Sulfonsäure sowie deren Alkalimetallsalze und/oder Ammoniumsalze, ethylenisch ungesättigten Carbonsäure und N-Vinylamid,
iv) Amid einer ethylenisch ungesättigten Carbonsäure, ethylenisch ungesättigten Sulfonsäure sowie deren Alkalimetallsalze und/oder Ammoniumsalze und ethylenisch ungesättigten Carbonsäure, und das besonders bevorzugt ein Copolymer ist, das aus Struktureinheiten besteht, die abgeleitet sind von

- Acrylamid und/oder Methacrylamid und 2-Acrylamido-2-methylpropansulfonsäure (AMPS) und/oder Vinylsulfonsäure; oder von
- Acrylamid und/oder Methacrylamid, und AMPS und/oder Vinylsulfonsäure und N-Vinylformamid und/oder N-Vinylpyrrolidon; oder von
- Acrylamid und/oder Methacrylamid und AMPS und/oder Vinylsulfonsäure und Acrylsäure und/oder Methacrylsäure; oder von
- Acrylamid und/oder Methacrylamid und AMPS und/oder Vinylsulfonsäure und Acrylsäure und/oder Methacrylsäure und N-Vinylformamid und/oder N-Vinylpyrrolidon.

Die erfindungsgemäß eingesetzten Copolymere zeichnen sich dadurch aus, dass sie unter dem Einfluss von mehrwertigen Metallionen, selbst bei geringen Konzentrationen, nicht oder nur unwesentlich agglomerieren, d.h. dass sie nicht vernetzen oder ausfallen. Das hat zur Folge, dass die Viskosität einer erfindungsgemäßen elektrolythaltigen Polymerlösung unter Anwendungsbedingungen, bei denen praktisch immer mehrwertige Metallionen vorliegen, sich nicht oder nur gering ändert, und dass die Filtrierbarkeit einer solchen Polymerlösung erhalten bleibt.

Der Anteil an Struktureinheiten abgeleitet von einem Amid einer ethylenisch ungesättigten Carbonsäure im erfindungsgemäß eingesetzten Copolymer beträgt üblicherweise von 5 bis 90 Gew. %, insbesondere von 10 bis 50 Gew. %, bezogen auf die Gesamtmenge der bei der Copolymerisation eingesetzten Monomeren.

Der Anteil an Struktureinheiten abgeleitet von einer ethylenisch ungesättigten Sulfonsäure im erfindungsgemäß eingesetzten Copolymer beträgt üblicherweise von 10 bis 95 Gew. %, insbesondere von 50 bis 90 Gew. %, bezogen auf die Gesamtmenge der bei der Copolymerisation eingesetzten Monomeren, wobei ethylenisch ungesättigte Sulfonsäuren, die neben dieser funktionellen Gruppe auch eine Carbonamid-Gruppe enthalten, nur bei der Gruppe der ethylenisch ungesättigten Sulfonsäuren betrachtet werden.

Besonders bevorzugt ergibt die Summe der vorstehend angegebenen Anteile an Struktureinheiten abgeleitet von einem Amid einer ethylenisch ungesättigten Carbonsäure und der vorstehend angegebenen Anteile abgeleitet von einer ethylenisch ungesättigten Sulfonsäure sowie deren Alkalimetall- und/oder Ammoniumsalze insgesamt 100 Gew.-% des erfindungsgemäß eingesetzten Copolymeren.

Der Anteil an Struktureinheiten abgeleitet von sonstigen Comonomeren also von anderen Comonomeren als einem Amid einer ethylenisch ungesättigten Carbonsäure und einer ethylenisch ungesättigten Sulfonsäure im erfindungsgemäß eingesetzten Copolymer beträgt üblicherweise nicht mehr als 20 Gew. %, insbesondere nicht mehr als 15 Gew. %, bezogen auf die Gesamtmenge der bei der Copolymerisation eingesetzten Monomeren.

Besonders bevorzugt ergibt die Summe der vorstehend angegebenen Anteile an Struktureinheiten abgeleitet von einem Amid einer ethylenisch ungesättigten Carbonsäure, der vorstehend angegebenen Anteile abgeleitet von einer ethylenisch ungesättigten Sulfonsäure sowie deren Alkalimetall- und/oder Ammoniumsalze und der vorstehend angegebenen Anteile an Struktureinheiten abgeleitet von sonstigen Comonomeren also von anderen Comonomeren als einem Amid einer ethylenisch ungesättigten Carbonsäure und einer ethylenisch ungesättigten Sulfonsäure, insgesamt 100 Gew.-% des erfindungsgemäß eingesetzten Copolymeren.

Enthalten die sonstigen Comonomeren mit mehrwertigen Metallionen vernetzbare Gruppen, wie Carbonsäuregruppen, so beträgt der Anteil der von diesen Comonomeren abgeleiteten Struktureinheiten im erfindungsgemäß eingesetzten Copolymer nicht mehr als 1 Gew. %, vorzugsweise nicht mehr als 0,1 Gew. %, bezogen auf die Gesamtmenge der bei der Copolymerisation eingesetzten Monomeren.

Ganz besonders bevorzugt sind diese Struktureinheiten im erfindungs-gemäß eingesetzten Copolymer überhaupt nicht enthalten.

Die erfindungsgemäß eingesetzten Copolymere wird durch inverse Emulsionspolymerisation hergestellt. Die inverse Emulsionspolymerisation bietet dabei den Vorteil, dass sehr hohe Molekulargewichte erreicht werden können. Außerdem ist durch das Vorliegen des Polymers in inverser Emulsion eine sehr schnelle Hydratation und somit ein schneller Viskositätsaufbau möglich, wenn das Polymer in Wasser gegeben wird. Erfindungsgemäß wird das verwendete Polymer daher mittels inverser Emulsionspolymerisation hergestellt.

Die polymerisierbaren Monomeren können in der Regel in handelsüblicher Form, also ohne vorherige Reinigung, eingesetzt werden.

Die erfindungsgemäß eingesetzten Copolymerisate werden durch inverse Emulsionspolymerisation dadurch hergestellt, dass man die zu polymerisierenden Monomeren einer radikalischen Copolymeriation unterzieht.

Unter radikalischer Copolymerisation wird im Rahmen dieser Beschreibung verstanden, dass mindestens zwei radikalisch miteinander polymerisierbare Monomeren unter den Bedingungen der radikalischen Copolymerisation miteinander umgesetzt werden. Dabei können Copolymerisate mit statistischer oder alternierender Verteilung der von den mindestens zwei Monomeren abgeleiteten Struktureinheiten entstehen oder auch Block-Copolymere, in denen aus den einzelnen Monomeren aufgebaute Blöcke vorliegen, die miteinander kovalent verknüpft sind.

Das Verfahren der inversen Emulsionspolymerisation an sich ist bekannt. Die zu copolymerisierenden Monomere werden dabei zweckmäßigerweise nacheinander in Wasser aufgelöst. Feste Monomere können aber gegebenenfalls auch zunächst in flüssigen Monomeren gelöst werden und die so erhaltene Lösung dann in Wasser gelöst werden. Wasserunlösliche oder schwer in Wasser lösliche Monomere werden in der Regel vor der Zugabe der wäßrigen Lösung in der hydrophoben Flüssigkeit gelöst.

Bei einem bevorzugten Verfahren der inversen Emulsionspolymerisation wird eine hydrophile Phase, die in der Regel 10 bis 100 Gew.%ig an Monomeren und 0 bis 90 Gew.-% an Wasser (bezogen auf die Gesamtmasse der hydrophilen Phase) in einer inerten hydrophoben Flüssigkeit emulgiert und darin in Gegenwart eines lipophilen Emulgators, vorzugsweise eines Emulgators mit einem HLB-Wert von 10 oder weniger, normalerweise bei Temperaturen von -20 bis 200 °C, vorzugsweise von 10 bis 90°C, copolymerisiert.

Die Polymerisation findet normalerweise unter Atmosphärendruck statt, höherer Druck kann angewendet werden. Dies empfiehlt sich insbesondere dann, wenn der Siedepunkt der Mischung bei Atmosphärendruck nahezu erreicht oder überschritten wird.

Unter "wasserlöslich" ist im Rahmen dieser Beschreibung die Löslichkeit von mindestens 1 g einer Substanz in 1 Liter Wasser von 25°C zu verstehen.

Die Copolymerisation wird in an sich bekannter Weise, z.B. durch UV-Licht, energiereiche Strahlung, in der Regel aber durch einen im Reaktionsgemisch löslichen, Radikale liefernden Initiator ausgelöst. Geeignete Initiatoren sind z.B. Benzoylperoxid, tert-Butylhydroperoxid, Cymolperoxid, Methylethylketonperoxid, Lauroylperoxid, tert-Butylperbenzoat, tert-Butyldiperphthalat, Azodiisobutyronitril, 2,2'-Azo-bis-(2,4-dimethylvaleronitril), 2-Phenyl-azo-2,4-dimethyl-4-methoxy-valeronitril, 2-Cyano-2-propyl-azoformamid, Azodiisobutyramid, Dimethyl-, Diethyl- oder Dibutyl-azobis-methylvalerat. Bezogen auf die Gesamtmonomerenmenge werden etwa 0,01 bis 2 Gew.%, vorzugsweise 0,1 bis 1 Gew.% Initiator angewandt.

Der Radikalinitiator oder das Gemisch verschiedener Radikalinitiatoren kann der Wasser- und/oder Ölphase zugesetzt werden.

Als hydrophobe, die Ölphase bildende Flüssigkeiten können alle Wasser nicht lösende inerte Flüssigkeiten verwendet werden. Derartige Flüssigkeiten sind z.B. organische Lösungsmittel, insbesondere Kohlenwasserstoffe, wie z.B. Cyclohexan, n-Pentan, n-Hexan, n-Heptan, i-Octan, technische Kohlenwasserstoffgemische, Toluol, Xylol, halogenierte Kohlenwasserstoffe, wie z.B. Chlorbenzol, o-Dichlor-benzol. Auch Mischungen verschiedener organischer Lösungsmittel sind geeignet.

Der lipophile Emulgator muß in der benutzten hydrophoben Flüssigkeit löslich sein und verhindert ein Zusammenfließen der fein zerteilten dispersen wäßrigen Phase. Geeignete lipophile Emulgatoren sind organische Substanzen mit niedrigen HLB-Werten, wie z.B. Sorbitanester, wie Sorbitanoleate oder Sorbitanstearate, oder ethoxylierte Fettsäureamide, Glyzerinfettsäureester, wie Glycerinoleate, oder Diacetylweinsäureester von Fettsäureglyceriden, Polysiloxane, oder Polyalkylenglykole, oder ein Gemisch aus einem lipohilen und einem hydrophilen Emulgator, dessen Gesamt-HLB-Wert <10 ist.

Der HLB-Wert (englische Abkürzung für: hydrophilic-lipophilic-balance) beschreibt den hydrophilen und lipophilen Anteil von nichtionischen Tensiden.

Für die Zwecke dieser Beschreibung wird der nach der Methode von Griffin berechnete HLB-Wert verwendet. Dieser errechnet sich nach der nachstehenden Formel:

$$HLB = 20 * (1 - M_l/M)$$

Dabei bedeutet $M_l$ die Molmasse des lipophilen Anteils des Tensidmoleküls und M ist die Molmasse des gesamten Moleküls. Der Faktor 20 ist frei ausgewählter Skalierungsfaktor. Man erhält damit in der Regel eine Skala von 1 bis 20. Ein HLB-Wert von 1 spricht für eine lipophile Verbindung, eine chemische Verbindung mit einem HLB-Wert von 20 hat einen hohen hydrophilen Anteil.

Der lipophile Emulgator oder ein Gemisch verschiedener lipophiler Emulgatoren kommen in der Regel in Mengen von 0,05 bis 10 Gew.%, vorzugsweise 0,1 bis 5 Gew.%, bezogen auf die Gesamtmasse des Ansatzes zum Einsatz. Die Volumina der wäßrigen Lösung und der hydrophoben Flüssigkeit verhalten sich normalerweise wie 0,5-10 : 1. Die Dispergierung der wäßrigen Lösung in der mit lipophilem Schutzkolloid/lipophilem Emulgator versetzten Ölphase erfolgt in an sich bekannter Weise, vorzugweise durch kräftiges Rühren. Es ist zweckmäßig, die Copolymerisation unter Ausschluß von Sauerstoff durchzuführen. Dies kann in bekannter Weise durch Spülen bzw. Durchleiten eines Inertgases, wie z.B. Stickstoff, erfolgen. Die Copolymerisation ist in der Regel nach 0,3 bis 3 h beendet. Nach beendeter Copolymerisation liegt das erhaltene Copolymerisat als Dispersion in einer Wasser-in-Öl-Phase vor.

Die fertige Wasser-in-Öl-Dispersion besteht in der Regel zu 20 bis 90 Gew. %, bezogen auf die Gesamtmasse des Ansatzes, aus einer wässrigen Phase. Die wässrige Phase enthält praktisch das gesamte Copolymerisat. Die Konzentration des Copolymerisates in der wässrigen Phase beträgt üblicherweise 20 bis 60 Gew. %, bezogen auf die Gesamtmasse der wässrigen Phase. Die kontinuierliche äußere Phase der Wasser-in-Öl-Polymerdispersion, nämlich die flüssigen Kohlenwassser-stoffe und die Wasser-in-Öl-Emulgatoren, ist in der Regel zu 10 bis 80 Gew. %, bezogen auf die Gesamtmasse des Ansatzes, am Aufbau der gesamten Dispersion beteiligt.

Für die erfindungsgemäße Anwendung zur Tertiärförderung von Erdöl müssen die Polymere aus den Micellen der Wasser-in-Öl-Dispersion freigesetzt werden. Dies erfolgt durch Zerstören der Micellen, nachdem die Dispersion zu Wasser oder salzhaltiger Lösung zugegeben wurde, entweder durch Einbringen von ausreichend mechanischer Energie (z.B. durch Rühren) oder durch Zugabe eines Tensids mit einem HLB-Wert > 10. Dieser Vorgang wird Invertierung genannt. Geeignete Tenside bewirken eine vollständige Invertierung, die innerhalb weniger Sekunden ohne Bildung von Agglomeraten abläuft. Das Invertierungstensid kann auch direkt der inversen Copolymeremulsion zugegeben werden.

Erfindungsgemäß wird ein Tensid, wie in Anspruch 1 definiert, verwendet, das die Filtrierbarkeit der Polymerlösung verbessert. Die Erfindung beschreibt ein nichtionisches Tensidwie in Anspruch 1 definiert, in salzhaltigen Lösungen, wie in Anspruch 1 definiert, die selbst bei hohen Salzkonzentrationen eine schnelle und vollständige Invertierung zu bewirken und die Filtrierbarkeit der Copolymerlösung zu verbessern,

Erfindungsgemäße Polymerlösungen,enthalten synthetisches Copolymer das mittels inverser Emulsionspolymerisation hergestellt worden ist.

Die mittleren Molekulargewichte der erfindungsgemäß eingesetzten Copolymeren können in weiten Bereichen schwanken. Sie können mittels Gelpermationschromato-graphie (GPC) bestimmt werden. Dabei werden als Standard kommerziell erhältliche Polymere z.B. aus Acrylamid mit Molekulargewichten von 1.140.000 Dalton und 5.550.000 Dalton verwendet. Als Trennmedium kann eine Säule bestehend aus einem Polyhydroxymethacrylat Copolymer Netzwerk mit einem Porendurchmesser von 30.000 Å verwendet werden. Typischerweise liegen die gewichtsmittleren Molekulargewichte der erfindungsgemäß eingesetzten Copolymere zwischen 10.000 und 25.000.000 Dalton (g/mol), vorzugsweise zwischen 1.000.000 und 10.000.000 Dalton.

Besonders bevorzugt werden Polymerlösungen eingesetzt, die Copolymere mit einem gewichtsmittleren Molekulargewicht von mindestens 1 Mio Dalton enthalten.

Bei dem in der erfindungsgemäßen Polymerlösung eingesetzten nichtionischen Tensid handelt es sich um eine ausgewählte alkoxylierte Verbindung wie in Anspruch 1 definiert. Das nichtionische Tenside hat einen HLB-Wert von mindestens 10. Die nachfolgend aufgeführten bevorzugten Ausführungsformen des erfindungsgemäß eingesetzten nichtionischen Tensids beziehen sich stets auf solche, die einen HLB-Wert von mindestens 10 aufweisen.

Als Alkoxygruppen werden erfindungsgemäß Ethoxy-gruppen verstanden. Diese können statistisch verteilt sein oder in Form von Blöcken auftreten.

Die erfindungsgemäß eingesetzten nichtionischen Tenside sind - bedingt durch die Art ihrer Herstellung - Gemische von Tensiden unterschiedlichen Ethoxyierungs-grades. Diese Tenside werden durch die Angabe eines mittleren Ethoxyierungs-grades charakterisiert. Der mittlere Ethoxylierungsgrad wird häufig in den Datenblättern der Tensidhersteller angegeben. Die Auftrennung der Tensidgemische kann durch chromatographische Methoden erfolgen. Dabei erfolgt auch eine Auftrennung anhand des Ethoxylierungsgrades der Tenside. Aus den Gewichtsanteilen der einzelnen Komponenten kann ein Mittelwert gebildet werden. Erfindungsgemäß beträgt der mittlere Ethoxylierungsgrad dieser nichtionischen Tenside zwischen 8-10.

Die erfindungsgemäß eingesetzten nichtionischen Tenside leiten sich von $C_{10}$-$C_{15}$-Fettalkoholen ab und haben einen Mittelwert von 8-10 Ethylenoxid-Einheiten, ganz besonders bevorzugt werden nichtionische Tenside eingesetzt, die sich von einem $C_{13}$-Alkohol ableiten und einen Mittelwert von 8 Ethylenoxid-Einheiten aufweisen.

Die erfindungsgemäße elektrolythaltige Polymerlösung weist in der Regel eine Konzentration des wasserlöslichen Copolymeren von 0,01 bis 2 Gew.-%, bevorzugt von 0,01 bis 0,5 Gew-% und besonders bevorzugt von 0,05 bis 0,5 Gew.-%, auf, wobei die Konzentrationsangaben jeweils auf die Gesamtmenge der Polymerlösung bezogen sind.

Die erfindungsgemäße eletrolythaltige Polymerlösung weist in der Regel eine Konzentration des nichtionischen Tensids von 0,01 bis 5 Gew.-%, bevorzugt von 0,01 bis 1 Gew-% und besonders bevorzugt von 0,05 bis 0,5 Gew-%, auf, wobei die Konzentrationsangaben jeweils auf die Gesamtmenge der Polymerlösung bezogen sind.

Die erfindungsgemäße Polymerlösung zeichnet sich durch ein sehr gutes Filtrationsverhalten aus. Das bedeutet, dass die Polymerlösung im Sedimentgestein keine nennenswerten Verstopfungen verursacht. Für die Zwecke dieser Beschreibung wird das Filtrationsverhalten wie folgt charakterisiert:

Es wird Quarzsand (P-Sand 0.04-0.15 der Firma Busch Quarz GmbH) verwendet. Ein 25 cm langes Rohr mit innerer Querschnittsfläche von 0,694 cm$^2$ wird vollständig mit Sand gefüllt. Die Sandpackung wird verdichtet. Als Flutmedium wird VE-Wasser mit folgendem Zusatz an Salzen, bezogen auf die Gesamtmasse an Wasser, ver-wendet: 18,7 Gew. % NaCl, 0,15 Gew. % KCl, 0,2 Gew. % $MgCl_2$ und 1,0 Gew. % $CaCl_2$. Das Salzwasser wird vor der Injektion in die Sandpackung über einen Tiefenfilter des Typs BECO S100 mit einer Nominal-abscheiderate von 0,1 $\mu$m filtriert. Anschließend werden dem Wasser die angegebenen Mengen an Polymer und Tensid zugesetzt. Es wird zunächst für eine Zeit von 10 bis 20 Min. reines Salzwasser mittels einer HPLC-Pumpe bei einem fest eingestellten Fluss von 5 ml/min über die Sandpackung gefahren. Dann wird auf das Flutmedium mit Polymer und Tensid umgestellt und ebenfalls mit einem Fluss von 5 ml/min für mindestens 60 Min. über die Sandpackung gefahren. Anschließend wird wieder auf reines Salzwasser umgestellt. Abhängig vom jeweiligen Flutmedium werden unterschiedlich hohe Drücke erhalten, welche mittels eines Dataloggers aufgezeichnet werden.

Besonders bevorzugte Polymerlösungen zeichnen sich durch ein nach der oben beschriebenen Methode ermitteltes Filtrationsverhalten aus, wobei gilt:

o Der Druck soll während der Versuchsdauer nur einen geringen Druckanstieg zeigen, der geringer als 5 % des Anfangswertes der Injektion der PolymerLösung ist ($\Delta p_{Injekt}$). Idealerweise ist der Druck über die gesamte Versuchsdauer konstant. Die Druckschwankungen der Messwerte sollen geringer als $\pm 0,7$ bar sein. Bei einem konstanten Druck bilden sich keine Ablagerungen oder Verstopfungen durch das Polymer in der Sandpackung.

o Weiterhin soll der Druck nach Beendigung der Injektion der Polymerlösung auf einen Wert abfallen, der von dem Wert vor Beginn der Injektion um weniger als $\pm 20$ % abweicht ($\Delta p_{Spül}$). Ein um mehr als 20 % höherer Wert weist auf Polymerablagerungen auf der Sandpackung hin.

Bei langen Injektionszeiten und großen Entfernungen, die das Polymer in einer Erdöllagerstätte zurücklegen müsste, könnten schon geringe Ablagerungen zu gravierenden Verstopfungen in der Formation führen.

Der absolute Druck, der bei der Messung erreicht wird, wird bestimmt durch die Konzentration des Polymers in der Lösung, die Wechselwirkungen mit dem Tensid und dem Sand sowie dem Molekulargewicht des Polymers und seiner Linearität und/oder Vernetzung. Je höher das Molekulargewicht ist, desto höher ist die Viskosität. Bei gleicher Polymerkonzentration werden daher bei höherem Molekulargewicht höhere Viskositäten und damit höhere Drucke erreicht. Wegen der Scherempfindlichkeit lassen sich jedoch keine eindeutigen Beziehungen zwischen Molekulargewicht/Viskosität und Druck in der Sandpackung ableiten. Vernetzte oder verzweigte Polymere können vergleichbare Drucke wie lineare Polymere aufbauen, hier zeigen sich jedoch ein Druckaufbau während des Versuchs und ein höherer Druck beim Durchströmen der Sandpackung mit Salzlösung.

Die erfindungsgemäßen elektrolythaltigen Polymerlösungen kommen hauptsächlich bei der Tertiärförderung von Erdöl zum Einsatz.

Die Erfindung betrifft daher auch ein Verfahren zur Tertiärförderung von Erdölen durch Fluten, wobei die oben beschriebene elektrolythaltige wässrige Polymerlösung als Flutungsmittel verwendet wird.

Das Verfahren ist dadurch gekennzeichnet, dass zur Herstellung der elektrolythaltigen wässrigen Polymerlösung zunächst eine konzentrierte wässrige Lösung des Copolymeren mit Wasser oder Elektrolytlösung durch Invertieren der Wasser-in Öl-Copolymerdispersion hergestellt. Diese Lösung wird dann mit der elektrolythaltigen Salzlösung ggf. unter Zugabe des nichtionischen Tensids auf die Zielkonzentration weiter verdünnt.

Ganz besonders bevorzugt ist ein Verfahren, bei dem als Wasser zum Verdünnen der konzentrierten Polymerlösung oder der Wasser-in-Öl-Emulsion zum Anmischen des Flutungsmittels Lagerstättenwasser verwendet wird. Dieses ist besonders von Vorteil, da vor allem im Off-Shore-Bereich Frischwasser häufig nicht oder nicht in ausreichenden Mengen vorhanden ist.

Das zugesetzte nichtionische Tensid hat hauptsächlich zwei Funktionen. Zum einen setzt es das Polymer aus der Wasser-in-Öl-Emulsion frei und zum anderen verbessert es die Injektivität der entsprechenden Polymerlösung in die Erdöllagerstätte. Als Tenside sind demnach nur solche geeignet, die in salzhaltigen Wässern, z.B. dem bevorzugt verwendeten Lagerstättenwasser, vollständig löslich sind und nicht ausflocken. Es kommen daher Tenside des oben genannten Typs in Frage, insbesondere Tenside des Isotridecanol-Typs mit mindestens sieben Ethylenoxid-einheiten.

Die nachstehenden Beispiele erläutern die Erfindung ohne diese einzuschränken.

Beispiele 1 bis 4: Polymerisation in inverser Emulsion

Beispiel 1

In 160 g $C_{11}$-$C_{16}$-Isoparaffin wurden 20 g Sorbitanmonooleat gelöst. In einem Becherglas wurden 110 g Wasser und 36 g wässrige Ammoniaklösung (25%) vorgelegt, auf 5 °C gekühlt, und 110 g 2-Acrylamido-2-methylpropansulfonsäure zugegeben. Mittels wässriger Ammoniaklösung (25%) wurde der pH-Wert auf 7,1 eingestellt. Anschließend wurden 146,66 g Acrylamid (50%ige Lösung in Wasser) zugegeben.

Die wässrige Monomerlösung wurde unter starkem Rühren in die Lösung aus $C_{11}$-$C_{16}$-Isoparaffin und Sorbi-tanmonooleat geben. Es wurde für 45 Min mit Stickstoff inertisiert. Zum Starten wurden 0,5 g Azoisobutyronitril in 12 g $C_{11}$-$C_{16}$-Isoparaffin gelöst und zu der Reaktionsmischung gegeben und die Lösung auf 50 °C angeheizt.

Sobald die Maximaltemperatur erreicht war, wurde mittels Ölbad für 2 h auf 80 °C erhitzt. Die Suspension wurde auf Raumtemperatur abgekühlt und kann ohne weitere Aufarbeitung eingesetzt werden.

Beispiel 2

Herstellung analog Beispiel 1, jedoch mit folgender Monomerzusammensetzung: 110 g 2-Acrylamido-2-methylpropansulfonsäure, 55 g Acrylamid, 18,3 g N-Vinylpyrrolidon.

Beispiel 3

Herstellung analog Beispiel 1, jedoch mit folgender Monomerzusammensetzung: 45 g 2-Acrylamido-2-methylpropansulfonsäure, 82,5 g Acrylamid.

Beispiel 4 (Vergleich)

Herstellung analog Beispiel 1, jedoch mit folgender Monomerzusammensetzung: 98 g Acrylamid, 42 g Acrylsäure.

Beispiel 5: Verhalten von Tensiden in Salzwasser

Die Löslichkeit von Tensiden mit einem HLB ≥10 wurde in Salzwasser mit 20,0 Gew.% NaCl, 0,73 Gew.% KCl, 0,35 Gew.% $MgCl_2$ und 2,0 Gew.% $CaCl_2$ (bezogen auf die Gesamtmasse an Lösung) überprüft. Angesetzt wurde jeweils eine 2 Gew.%-ige Tensidlösung bezogen auf die Gesamtmasse an Lösung . Nur Tenside, welche sich im Salzwasser homogen lösten sind auch für eine Anwendung zur tertiären Erdölförderung geeignet.

Die Ergebnisse sind in nachfolgender Tabelle aufgeführt.

| Tensid | homogen löslich |
|---|---|
| Sorbitanmonolaurat 4 EO | nein |
| Sorbitanmonostearat 20 EO | nein |
| Sorbitanmonooleat 5 EO | nein |
| Dodecylalkohol 4 EO | nein |
| Natriumdodecylsulfat | nein |
| Kokosfettamin 2 EO | nein |
| Sorbeth-30-Tetraoleat | nein |
| Sorbitantrioleat 20 EO | nein |

(fortgesetzt)

| Tensid | homogen löslich |
|---|---|
| Sorbitantristearat 20 EO | nein |
| Isotridecanol 6 EO | nein |
| Isotridecanol 7 EO | ja |
| Isotridecanol 8 EO | ja |
| Isotridecanol 9 EO | ja |
| Isotridecanol 10 EO | ja |
| Oleylalkohol 10 EO | ja |
| Dodecylalkohol 7 EO | ja |
| Nonylphenol 10 EO | ja |

Beispiel 6: Viskositäten von Polymer/Tensidlösungen in Salzwasser

Die nachfolgend aufgeführten Viskositäten wurden in Wasser mit folgender Zusammensetzung gemessen:18,7 Gew.% NaCl, 0,15 Gew.% KCl, 0,2 Gew.% $MgCl_2$ und 1,0 Gew.% $CaCl_2$ (bezogen auf die Gesamtmasse an Lösung).

Es wurde jeweils eine 0,2 Gew%ige Polymerlösung (bezogen auf die Gesamtmasse an Lösung) in Salzwasser mit der in der Tabelle aufgeführten Menge an Tensid (Gew.% bezogen auf die Gesamtmasse an Lösung) angesetzt und die Viskosität mittels Rheometer bei 30 °C und einer Scherrate von 10 $s^{-1}$ gemessen.

Die Ergebnisse sind in nachfolgender Tabelle aufgeführt.

| Polymer | Tensid | Viskosität [mPas] |
|---|---|---|
| Beispiel 1 | 0,0% | 7,8 |
| Beispiel 1 | 0,1 % Isotridecanol 8 EO | 9,2 |
| Beispiel 2 | 0,0% | 7,3 |
| Beispiel 2 | 0,1 % Isotridecanol 8 EO | 10,6 |
| Beispiel 4 (Vergleich) | 0,0% | 6,8 |
| Beispiel 4 (Vergleich) | 0,1 % Isotridecanol 8 EO | 8,0 |

Beispiele 7 -12:

Die nachfolgend aufgeführten Viskositäten wurden in Wasser mit folgender Zusammensetzung gemessen:18,7 Gew.% NaCl, 0,15 Gew.% KCl, 0,2 Gew.% $MgCl_2$ und 1,0 Gew.% $CaCl_2$ jeweils bezogen auf die Gesamtmasse der Lösung. Es wurde jeweils eine 0,75 Gew.%ige Polymerlösung (bezogen auf die Gesamtmasse der Lösung) mit Polymer gemäß Beispiel 1 in oben angeführtem Salzwasser angesetzt und so viel Tensid zugegeben, dass eine 0,40 Gew.%ige Tensidlösung (bezogen auf die Gesamtmasse an Lösung) entsteht. Die Viskosität wurde mittels Rheometer bei 80 °C und einer Scherrate von 10 $s^{-1}$ gemessen.

Die nachfolgende Tabelle zeigt die Resultate.

| Beispiel | Tensid | Viskosität [mPas] |
|---|---|---|
| 7 (Vergleich) | Isotridecanol 6 EO | nicht messbar, da ausgeflockt |
| 8 (Vergleich) | Isotridecanol 7 EO | nicht messbar, da ausgeflockt |
| 9 | Isotridecanol 8 EO | 93,7 |
| 10 | Isotridecanol 9 EO | 104,6 |
| 11 | Isotridecanol 10 EO | 140,2 |
| 12 | Nonylphenol 10 EO | 151,5 |

Beispiele 13-14:

Die nachfolgend aufgeführten Viskositäten wurden in Wasser mit folgender Zusammensetzung gemessen: 13,0 Gew.% NaCl, 1,0 Gew.% $CaCl_2$ jeweils bezogen auf die Gesamtmasse der Lösung. Es wurde jeweils eine 0,50 Gew.%ige Polymerlösung (bezogen auf die Gesamtmasse der Lösung) mit Polymer in oben angeführtem Salzwasser angesetzt und so viel Tensid zugegeben, dass eine 0,50 Gew.%ige Tensidlösung (bezogen auf die Gesamtmasse an Lösung) entsteht. Die Viskosität wurde mittels Rheometer bei unterschiedlichen Temperaturen und einer Scherrate von 7 $s^{-1}$ gemessen.

Die nachfolgende Tabelle zeigt die Resultate.

| Beispiel | Polymer | Temperatur [°C] | Viskosiät [mPas] |
|---|---|---|---|
| 13 (Vergleich) | Polymer nach Beispiel 4 | 30 | 9,4 |
| 13 (Vergleich) | Polymer nach Beispiel 4 | 60 | 20,3 |
| 13 (Vergleich) | Polymer nach Beispiel 4 | 80 | 19,2 (flockt aus) |
| 14 | Polymer nach Beispiel 3 | 30 | 92,1 |
| 14 | Polymer nach Beispiel 3 | 60 | 171,8 |
| 14 | Polymer nach Beispiel 3 | 80 | 127,2 |

Beispiele 15-18: Injektivität in Sandpackungen

Es wurde P-Sand 0.04-0.15 der Firma Busch Quarz GmbH verwendet. Ein 25 cm langes Rohr mit innerer Querschnittsfläche von 0,694 $cm^2$ wurde vollständig mit Sand gefüllt. Die Sandpackung wurde verdichtet. Als Flutmedium wurde VE-Wasser mit folgendem Zusatz an Salzen verwendet: 18,7 Gew.% NaCl, 0,15 Gew.% KCl, 0,2 Gew.% $MgCl_2$ und 1,0 Gew.% $CaCl_2$ (bezogen auf die Gesamtmasse an Lösung). Das Salzwasser wurde vor der Injektion in die Sandpackung über einen Tiefenfilter de Typs BECO S100 mit einer Nominalabscheiderate von 0,1 $\mu$m filtriert. Anschließend wurden dem Wasser die angegebenen Mengen an Polymer und Tensid zugesetzt (jeweils bezogen auf die Gesamtmasse an Lösung). Es wurde zunächst für eine Zeit von 10 bis 20 Min. reines Salzwasser mittels einer HPLC-Pumpe bei einem fest eingestellten Fluss von 5 ml/min über die Sandpackung gefahren. Dann wurde auf das Flutmedium mit Polymer und Tensid umgestellt und ebenfalls mit einem Fluss von 5 ml/min für mindestens 40 Min. über die Sandpackung gefahren. Anschließend wurde wieder auf reines Salzwasser umgestellt. Abhängig vom jeweiligen Flutmedium wurden unterschiedlich hohe Drücke erhalten, welche mittels eines Datenloggers aufgezeichnet wurden.

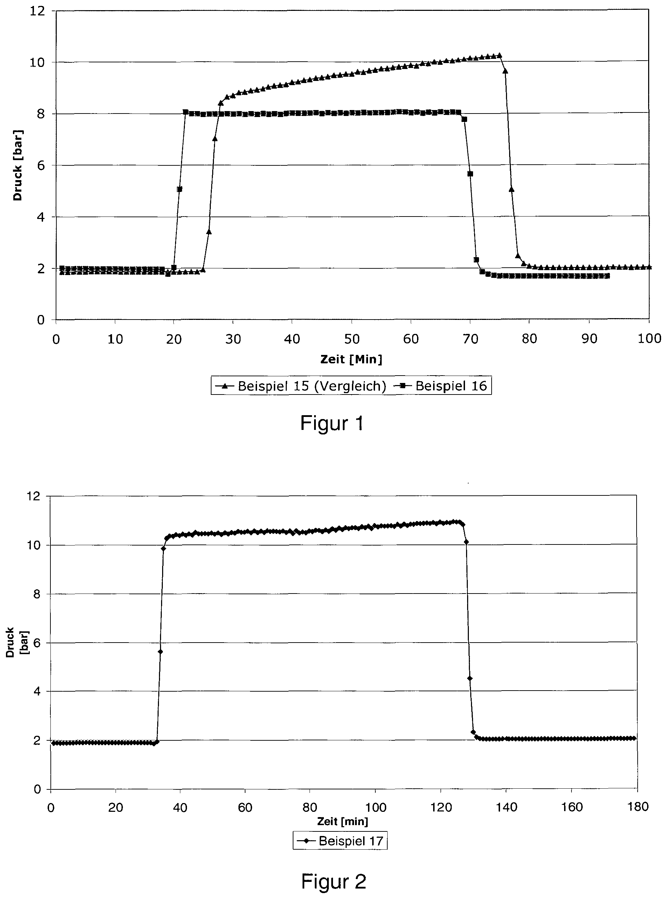

Beispiel 15 (Vergleich) betrifft die Filtration von 0,2 Gew% Polymer aus Beispiel 1 ohne Tensid. Die Ergebnisse sind in Figur 1 dargestellt.

Beispiel 16 betrifft die Filtration von 0,2 Gew% Polymer aus Beispiel 1 mit 0,1 Gew% des ethoxylierten Tensids Isotridecanol 8EO (EO=Ethylenoxid-Einheiten). Die Ergebnisse sind ebenfalls in Figur 1 dargestellt.

Beispiel 17 betrifft die Filtration von 0,3 Gew% Polymer aus Beispiel 3 mit 0,1 Gew% des ethoxylierten Tensids Isotridecanol 8EO. Die Ergebnisse sind in Figur 2 dargestellt.

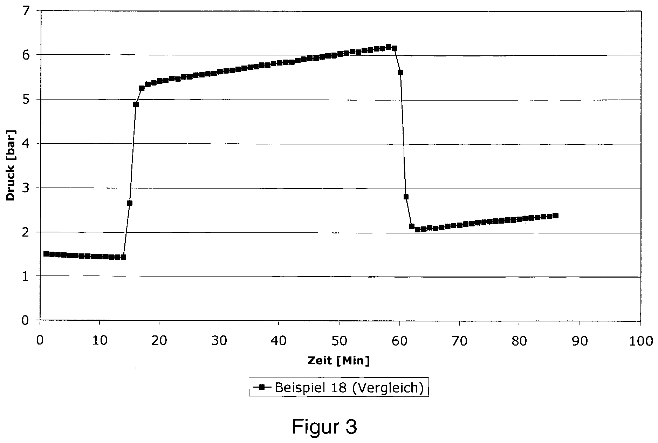

Beispiel 18 (Vergleich) betrifft die Filtration von 0,2 Gew% Polymer aus Beispiel 4 mit 0,1 Gew% des ethoxylierten Tensids Isotridecanol 8EO. Die Ergebnisse sind in Figur 3 dargestellt.

**Patentansprüche**

**1.** Elektrolythaltige wässrige Polymerlösung mit einem Salzgehalt von >10 bis 35 Gew-%, bezogen auf die Gesamtmenge der Polymerlösung, enthaltend mindestens ein gelöstes synthetisches Copolymer und mindestens ein nichtionisches Tensid ausgewählt aus der Gruppe der ethoxylierten $C_{10}$ - $C_{15}$ Fettalkohole, mit der Maßgabe, dass der mittlere Ethyoxylierungsgrad dieser Tenside 8-10 beträgt, und das nichtionische Tensid einen HLB-Wert von mindestens 10 besitzt, wobei das synthetische Copolymer durch inverse Emulsionspolymerisation hergestellt worden ist und das synthetische wasserlösliche Copolymer aus Struktureinheiten besteht, die durch Polymerisation von Monomeren

i) Amid einer ethylenisch ungesättigten Carbonsäure und ethylenisch ungesättigten Sulfonsäure sowie deren Alkalimetallsalze und/oder Ammoniumsalze;
ii) Amid einer ethylenisch ungesättigten Carbonsäure, ethylenisch ungesättigten Sulfonsäure sowie deren Alkalimetallsalze und/oder Ammoniumsalze und N-Vinylamid,

iii) Amid einer ethylenisch ungesättigten Carbonsäure, ethylenisch ungesättigten Sulfonsäure sowie deren Alkalimetallsalze und/oder Ammoniumsalze, ethylenisch ungesättigten Carbonsäure und N-Vinylamid,

iv) Amid einer ethylenisch ungesättigten Carbonsäure, ethylenisch ungesättigten Sulfonsäure sowie deren Alkalimetallsalze und/oder Ammoniumsalze und ethylenisch ungesättigten Carbonsäure, und das besonders bevorzugt ein Copolymer ist, das aus Struktureinheiten besteht, die abgeleitet sind von

- Acrylamid und/oder Methacrylamid und 2-Acrylamido-2-methylpropan-sulfonsäure (AMPS) und/oder Vinylsulfonsäure; oder von
- Acrylamid und/oder Methacrylamid, und AMPS und/oder Vinylsulfonsäure und N-Vinylformamid und/oder N-Vinylpyrrolidon; oder von
- Acrylamid und/oder Methacrylamid und AMPS und/oder Vinylsulfonsäure und Acrylsäure und/oder Methacrylsäure; oder von
- Acrylamid und/oder Methacrylamid und AMPS und/oder Vinylsulfonsäure und Acrylsäure und/oder Methacrylsäure und N-Vinylformamid und/oder N-Vinylpyrrolidon,

erhalten werden.

2. Polymerlösung nach Anspruch 1, **dadurch gekennzeichnet, dass** das Copolymer ein gewichtsmittleres Molekulargewicht von mindestens 1 Mio Dalton aufweist.

3. Polymerlösung nach Anspruche 1 oder 2, **dadurch gekennzeichnet, dass** das nichtionische Tensid ein $C_{13}$-Alkohol mit einem Mittelwert von 8 Ethylenoxid-Einheiten ist.

4. Polymerlösung nach einem der Ansprüche 1 bis 3, **dadurch gekennzeichnet, dass** das wasserlösliche Copolymer in einer Konzentration von 0,01 bis 1 Gew.-%, bevorzugt in einer Konzentration von 0,01 bis 0,5 Gew-% und besonders bevorzugt in einer Konzentration von 0,05 bis 0,5 Gew-%, jeweils bezogen auf die Gesamtmenge der Polymerlösung, eingesetzt wird.

5. Polymerlösung nach einem der Ansprüche 1 bis 4, **dadurch gekennzeichnet, dass** das nichtionische Tensid in einer Konzentration von 0,01 bis 1 Gew.-%, bevorzugt in einer Konzentration von 0,01 bis 0,5 Gew-% und besonders bevorzugt in einer Konzentration von 0,05 bis 0,5 Gew-%, jeweils bezogen auf die Gesamtmenge der Polymerlösung, eingesetzt wird.

6. Verfahren zur Tertiärförderung von Erdölen durch Fluten, **dadurch gekennzeichnet, dass** eine elektrolythaltige wässrige Polymerlösung nach einem oder mehreren der Ansprüche 1 bis 5 als Flutungsmittel verwendet wird, bevorzugt wird zur Herstellung der elektrolythaltigen wässrigen Polymerlösung Lagerstättenwasser verwendet.

7. Verfahren nach Anspruch 6, **dadurch gekennzeichnet, dass** zur Herstellung der elektrolythaltigen wässrigen Polymerlösung eine konzentrierte wässrige Lösung des Copolymeren, die durch Lösen von Copolymeren oder vorzugsweise durch Invertieren einer Wasser-in-Öl-Emulsion des Copolymeren erhalten wird, mit Wasser verdünnt wird.

8. Verfahren nach Anspruch 6 oder 7, **dadurch gekennzeichnet, dass** das nichtionische Tensid nach der Verdünnung der konzentrierten Polymerlösung oder nach Invertieren der Wasser-in-Öl-Emulsion des Copolymeren mit Wasser der verdünnten Polymerlösung zugesetzt wird oder dass das nichtionische Tensid der konzentrierten Polymerlösung oder der Wasser-in-Öl-Emulsion vor der Verdünnung mit Wasser zugesetzt wird.

9. Verfahren nach einem der Ansprüche 6 bis 8 **dadurch gekennzeichnet, dass** das nichtionische Tensid der Wasser-in-Öl-Emulsion zugesetzt wird.

## Claims

1. An electrolyte-containing aqueous polymer solution with a salt content of >10% to 35% by weight with respect to the total weight of the polymer solution, containing at least one dissolved synthetic copolymer and at least one non-ionic surfactant selected from the group formed by ethoxylated $C_{10}$ - $C_{15}$ fatty alcohols, with the proviso that the average degree of ethoxylation of said surfactants is 8-10, and the non-ionic surfactant has an HLB of at least 10, wherein the synthetic copolymer has been produced by inverse emulsion polymerisation and the synthetic water-soluble copolymer consists of structural units which are obtained by polymerisation of the monomers:

i) an amide of an ethylenically unsaturated carboxylic acid and an ethylenically unsaturated sulphonic acid, as well as their alkali metal salts and/or ammonium salts;

ii) an amide of an ethylenically unsaturated carboxylic acid, an ethylenically unsaturated sulphonic acid, as well as their alkali metal salts and/or ammonium salts, and a N-vinylamide,

iii) an amide of an ethylenically unsaturated carboxylic acid, an ethylenically unsaturated sulphonic acid, as well as their alkali metal salts and/or ammonium salts, an ethylenically unsaturated carboxylic acid and a N-vinylamide,

iv) an amide of an ethylenically unsaturated carboxylic acid, an ethylenically unsaturated sulphonic acid, as well as their alkali metal salts and/or ammonium salts, and an ethylenically unsaturated carboxylic acid, and which is particularly preferably a copolymer which consists of structural units which are derived from:

- acrylamide and/or methacrylamide and 2-acrylamido-2-methylpropane-sulphonic acid (AMPS) and/or vinylsulphonic acid; or from
- acrylamide and/or methacrylamide, and AMPS and/or vinylsulphonic acid and N-vinylformamide and/or N-vinylpyrrolidone; or from
- acrylamide and/or methacrylamide and AMPS and/or vinylsulphonic acid and acrylic acid and/or methacrylic acid; or from
- acrylamide and/or methacrylamide and AMPS and/or vinylsulphonic acid and acrylic acid and/or methacrylic acid and N-vinylformamide and/or N-vinylpyrrolidone.

2. The polymer solution as claimed in claim 1, **characterized in that** the copolymer has a mass average molecular weight of at least 1 million dalton.

3. The polymer solution as claimed in claim 1 or claim 2, **characterized in that** the non-ionic surfactant is a $C_{13}$ alcohol with an average of 8 ethylene oxide units.

4. The polymer solution as claimed in one of claims 1 to 3, **characterized in that** the water-soluble copolymer is used in a concentration of 0.01% to 1% by weight, preferably in a concentration of 0.01% by weight to 0.5% by weight and particularly preferably in a concentration of 0.05% to 0.5% by weight, respectively with respect to the total quantity of the polymer solution.

5. The polymer solution as claimed in one of claims 1 to 4, **characterized in that** the non-ionic surfactant is used in a concentration of 0.01% to 1% by weight, preferably in a concentration of 0.01% to 0.5% by weight and particularly preferably in a concentration of 0.05% to 0.5% by weight, respectively with respect to the total quantity of the polymer solution.

6. A method for tertiary recovery of crude petroleum by flooding, **characterized in that** an electrolyte-containing aqueous polymer solution as claimed in one or more of claims 1 to 5 is used as the flooding agent, and preferably, reservoir water is used for the production of the electrolyte-containing aqueous polymer solution.

7. The method as claimed in claim 6, **characterized in that** a concentrated aqueous solution of the copolymers is used for the production of the electrolyte-containing aqueous polymer solution, which is diluted with water by dissolving the copolymers or, preferably, is obtained by inverting a water-in-oil emulsion of the copolymers.

8. The method as claimed in claim 6 or claim 7, **characterized in that** the non-ionic surfactant is added to the diluted polymer solution after dilution of the concentrated polymer solution or after inverting the water-in-oil emulsion of the copolymers with water, or **in that** the non-ionic surfactant is added to the concentrated polymer solution or to the water-in-oil emulsion prior to the dilution with water.

9. The method as claimed in one of claims 6 to 8, **characterized in that** the non-ionic surfactant is added to the water-in-oil emulsion.

**Revendications**

1. Solution aqueuse de polymères contenant des électrolytes, sa teneur en sels étant comprise entre > 10 et 35 % en poids par rapport à la quantité totale de ladite solution de polymères, laquelle contient au moins un copolymère synthétique dissous et au moins un agent tensioactif non-ionique choisi dans le groupe des alcools gras en $C_{10}$ à $C_{15}$ éthoxylés, à condition que le degré d'éthoxylation moyen de ces agents tensioactifs soit compris entre 8 et 10 et que la HLB de l'agent tensioactif non-ionique soit supérieure ou égale à 10, le copolymère synthétique ayant été préparé par polymérisation en émulsion inversée et le copolymère hydrosoluble synthétique étant constitué d'unités structurelles obtenues par polymérisation des monomères suivants

i) amide d'un acide carboxylique éthyléniquement insaturé et d'un acide sulfonique éthyléniquement insaturé ainsi que leurs sels de métaux alcalins et/ou sels d'ammonium ;

ii) amide d'un acide carboxylique éthyléniquement insaturé, d'un acide sulfonique éthyléniquement insaturé ainsi que leurs sels de métaux alcalins et/ou sels d'ammonium et N-vinylamide ;

iii) amide d'un acide carboxylique éthyléniquement insaturé, d'un acide sulfonique éthyléniquement insaturé ainsi que leurs sels de métaux alcalins et/ou sels d'ammonium, d'un acide carboxylique éthyléniquement insaturé et N-vinylamide,

iv) amide d'un acide carboxylique éthyléniquement insaturé, d'un acide sulfonique éthyléniquement insaturé ainsi que leurs sels de métaux alcalins et/ou sels d'ammonium et d'un acide carboxylique éthyléniquement insaturé, s'agissant avec une préférence particulière d'un copolymère constitué d'unités structurelles dérivées de

- acrylamide et/ou méthacrylamide et acide 2-acrylamido-2-méthylpropanesulfonique (AMPS) et/ou acide vinylsulfonique ; ou de
- acrylamide et/ou méthacrylamide, et AMPS et/ou acide vinylsulfonique et N-vinylformamide et/ou N-vinylpyrrolidone ; ou de
- acrylamide et/ou méthacrylamide et AMPS et/ou acide vinylsulfonique et acide acrylique et/ou acide méthacrylique ; ou de
- acrylamide et/ou méthacrylamide et AMPS et/ou acide vinylsulfonique et acide acrylique et/ou acide méthacrylique et N-vinylformamide et/ou N-vinylpyrrolidone.

2. Solution de polymères selon la revendication 1, **caractérisée en ce que** ledit copolymère présente une masse moléculaire moyenne en poids supérieure ou égale à 1 million de Dalton.

3. Solution de polymères selon les revendications 1 à 2, **caractérisée en ce que** ledit agent tensioactif non-ionique est un alcool en $C_{13}$ pourvu en moyenne de 8 unités d'oxyde d'éthylène.

4. Solution de polymères selon l'une des revendications 1 à 3, **caractérisée en ce que** ledit copolymère hydrosoluble est mis en œuvre dans une concentration comprise entre 0,01 à 1 % en poids, de préférence dans une concentration comprise entre 0,01 et 0,5 % en poids et, avec une préférence particulière, dans une concentration comprise entre 0,05 et 0,5 % en poids, à chaque instance par rapport à la quantité totale la solution de polymères.

5. Solution de polymères selon l'une des revendications 1 à 4, **caractérisée en ce que** ledit agent tensioactif non-ionique est mis en œuvre dans une concentration comprise entre 0,01 à 1 % en poids, de préférence dans une concentration comprise entre 0,01 et 0,5 % en poids et, avec une préférence particulière, dans une concentration comprise entre 0,05 et 0,5 % en poids, à chaque instance par rapport à la quantité totale de la solution de polymères.

6. Procédé de récupération tertiaire de pétroles par noyage, **caractérisé en ce qu'**une solution de polymères aqueuse contenant des électrolytes selon une ou plusieurs des revendications 1 à 5 est utilisée comme agent de noyage, ladite solution de polymères aqueuse contenant des électrolyte étant, de préférence, préparée avec de l'eau issue du gisement.

7. Procédé selon la revendication 6, **caractérisé en ce que** la solution de polymères aqueuse contenant des électrolytes est préparée en diluant une solution aqueuse concentrée de copolymères, laquelle a été obtenue en dissolvant des copolymères ou préférentiellement en soumettant une émulsion de type eau dans huile dudit copolymère à une inversion, avec de l'eau.

8. Procédé selon les revendications 6 ou 7, **caractérisé en ce que** ledit agent tensioactif non-ionique est ajouté à la solution diluée de polymères une fois la dilution de la solution de concentrée de polymères achevée ou une fois ladite émulsion de type eau dans huile du copolymère soumise à une inversion avec de l'eau, ou bien que l'agent tensioactif non-ionique est ajouté à la solution concentrée de polymères ou à l'émulsion de type eau dans huile avant la dilution avec de l'eau.

**9.** Procédé selon l'une des revendications 6 à 8, **caractérisé en ce que** ledit agent tensioactif non-ionique est ajouté à ladite émulsion de type eau dans huile.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1082208 B
- DE 3422613 A1
- DE 2646507 B
- DE 1234646 B
- DE 1116171 B
- DE 1033155 B
- DE 1097931 B
- DE 1097385 B
- DE 1017560 B
- DE 1014943 B
- DE 2557324 A1
- DE 2554082 A1

- DE 14138 A1
- DE 2432699 B
- WO 2011092221 A1
- WO 2011113470 A1
- WO 2010133258 A1
- US 20100197529 A1
- WO 0073623 A1
- EP 2457973 A
- US 6414080 B
- DE 102004035515 A1
- EP 0233533 A2

**In der Beschreibung aufgeführte Nicht-Patentliteratur**

- **L. L. SCHRAMM.** Surfactants: Fundamentals and Application in the Petroleum Industry. Cambridge Universtity Press, 2000, 203-250

- **D. B. LEVITT ; G. A. POPE.** *SPE 113845,* 2008